# EUROPÄISCHE PATENTANMELDUNG

(11) **EP 2 172 439 A1**
(43) Veröffentlichungstag der Anmeldung: **07.04.2010**
(21) Anmeldenummer: 08405246.3
(22) Anmeldetag: 01.10.2008
(51) Int. Cl.: C05F 17/02

(54) **Kompostiervorrichtung**

(71) Anmelder: Riwo Merath, 5462 Siglistorf (CH)
(72) Erfinder: Merath, Wolfgang, 5462 Siglistorf (CH)
(74) Vertreter: Rottmann, Maximilian

(57) **Zusammenfassung**

Die Vorrichtung zum Kompostieren von Haus- und Gartenabfällen weist eine um ihre Längsmittelachse (L) drehbare Trommel (1) auf. Die Trommel ist mit Mischelementen zum Durchmischen des Inhalts versehen. Über eine mittels Schiebetüren verschliessbare Öffnung (2) können Grünabfälle in die Trommel (1) eingefüllt werden. Zum Drehen der Trommel (1) ist ein Antrieb (6) vorgesehen. Der Antrieb (6) ist mittels eines selbsthemmenden Untersetzungsgetriebes mit der Trommel (1) gekoppelt.

## Beschreibung

Die Erfindung betrifft eine nach dem Oberbegriff des Anspruchs 1 ausgebildete Vorrichtung zum Kompostieren von organischen Abfällen.

Im Haushaltbereich werden zum Kompostieren von organischen Haus- und Gartenabfällen bis anhin überwiegend aufrecht stehende Behälter mit rundem oder polygonalem Querschnitt eingesetzt. Das zu kompostierende Material wird diesen Behältern von oben über eine Öffnung zugeführt. Ein grundsätzlicher Nachteil derartiger Behälter besteht darin, dass der eigentliche Kompostiervorgang relativ langsam vonstatten geht, da im Behälter praktisch keine Luftzirkulation stattfinden kann und ausserdem keine physische Durchmischung der zu kompostierenden Materialen und insbesondere eines allfällig zugegebenen Kompostbeschleunigers möglich ist.

Um diese Nachteile zu beheben sind Kompostiervorrichtungen bekannt, die mit einer um ihre Längsmittelachse drehbaren Trommel versehen sind. Eine derartige Vorrichtung ist beispielsweise in der US 5'589'391 beschrieben. Die darin beschriebene Kompostiervorrichtung weist einen rechteckigen Basisbehälter auf, der mit vier vertikalen Pfeilern versehen ist. Je zwei dieser Pfeiler sind am oberen Ende mittels eines Balkens miteinander verbunden. Auf diesen Balken ist eine Trommel drehbar abgestützt. Die Trommel weist einen sechseckigen Querschnitt auf. Auf der einen Seite der Trommel ist ein Handgriff angebracht, mittels welchem die Trommel gedreht werden kann. Die Trommel selbst besteht aus einer Vielzahl von Einzelteilen. Zur Bildung der Trommel sind namentlich Holzbretter vorgesehen. Mittels zwei sechseckigen, aus Stahl bestehenden Seitenrahmen werden die Holzbretter zu der sechseckigen Trommel zusammengefügt. Die Trommel ist ausserdem mit einer Öffnung versehen, welche mittels einer Tür verschliessbar ist.

Aus der US-A-5,300,438 ein Kompostierapparat bekannt, der mit einer drehbaren Trommel versehen ist. Die eine Stirnseite der Trommel ist mit einer Einlassöffnung versehen, während die gegenüberliegende Stirnseite der Trommel eine Entnahmeöffnung aufweist. Im Innern der Trommel sind Mischflügel angeordnet. Bei einem der gezeigten Ausführungsbeispiele ist die Trommel schräggestellt und mit einer gewindeartigen Trommelwandung versehen, welche das zu kompostierende Material bei drehender Trommel von der tiefer liegenden Einfüllöffnung zu der höher liegenden Entnahmeöffnung transportiert. In einem anderen Ausführungsbeispiel ist die Trommel mit einem Kippmechanismus versehen, mittels welchem die Trommel auf die eine oder andere Seite gekippt werden kann. Zum Einfüllen des zu kompostierenden Materials beispielsweise wird die Trommel derart gekippt, dass die Einlassseite höher liegt als die Auslassseite. Um die Trommel drehen zu können, sind auf deren Aussenseite Führungsschienen angeordnet, welche die Trommel umfassen. Der Antrieb der Trommel erfolgt über einen Elektromotor.

Die GB-A-2 359 504 offenbart einen Kompostbehälter, der drehbar auf einem Gestell angeordnet ist. Das Gestell ist mit einer trichterförmig zulaufenden Öffnung versehen, welche die Unterseite der Trommel teilweise umfasst. Die trichterförmig zulaufende Öffnung führt zu einem Schubfach, das der Aufnahme von kompostiertem Material dient. Die Trommel ist im weiteren mit einem Gitter versehen, das die Auslassöffnung bildet. Der Antrieb der Trommel erfolgt über ein stirnseitig angebrachtes Handrad.

Schliesslich ist aus der EP-A-1 348 682 eine gattungsgemässe Vorrichtung zum Kompostieren von Haus- und Gartenabfällen bekannt. Die Vorrichtung umfasst eine aus Kunststoff gefertigte Trommel, die drehbar auf einem Untergestell abgestützt ist. Die Trommel ist mit Mischelementen zum Durchmischen des Inhalts versehen. Die Mischelemente sind gleichzeitig als Verstärkungsrippen ausgebildet.

Eine grundsätzliche Problematik bei handbetriebenen Kompostbehältern besteht darin, dass das Drehen der Trommel mit zunehmendem Gewicht des Inhalts einen immer höheren Kraftaufwand erfordert, zumal das spezifische Gewicht mit fortschreitender Verrottung des Inhalts ansteigt, so dass letztlich grosse Mengen an Grünabfällen bzw. verrottetem Material in der Trommel aufgenommen werden können. Eine weitere Problematik besteht darin, dass insbesondere das verrottete Material an den Wänden der Trommel anhaftet und beim Drehen der Trommel daran "kleben" bleibt. Wird die Drehbewegung unterbrochen, bevor sich das Material von den Seitenwänden gelöst hat, so dreht sich die Trommel nach dem Loslassen des Handhebels durch die Unwucht wieder in ihre Ausgangsstellung zurück, sofern die Trommel nicht mittels einer Bremse oder einer Arretiervorrichtung in einer bestimmten Position blockiert wird.

Es ist daher die Aufgabe der Erfindung, eine gemäss dem Oberbegriff des Anspruchs 1 ausgebildete Vorrichtung zum Kompostieren von organischen Materialien derart weiterzuentwickeln, dass das Drehen der Trommel keinen hohen Kraftaufwand erfordert, wobei die Trommel nach dem Stoppen der Drehbewegung in der jeweiligen Position verharren soll.

Diese Aufgabe wird durch die im Kennzeichen des Anspruchs 1 angeführten Merkmale gelöst.

Indem der Antrieb mittels eines Untersetzungsgetriebes mit der Trommel gekoppelt ist, kann der Kraftaufwand zum Drehen der Trommel gering gehalten werden. Durch die Selbsthemmung des Untersetzungsgetriebes wird zudem erreicht, dass die Trommel nach dem Stoppen der Drehbewegung in der jeweiligen Position verharrt.

Bevorzugte Ausführungsbeispiele der Erfindung sind in den abhängigen Ansprüchen 2 bis 12 umschrieben.

So stellt ein Schneckengetriebe eine besonders bevorzugte Ausführung eines Untersetzungsgetriebes dar. Ein Schneckengetriebe ist kostengünstig zu realisieren und in Bezug auf Verschmutzung relativ unempfindlich. Bei entsprechender Auslegung ist es zudem selbsthemmend, namentlich wenn eine Untersetzung von zumindest 40:1, insbesondere von zumindest 50:1 gewählt wird.

Anhand von Zeichnungen wird nachfolgend ein bevorzugtes Ausführungsbeispiel der Erfindung näher beschrieben. In diesen Zeichnungen zeigt:

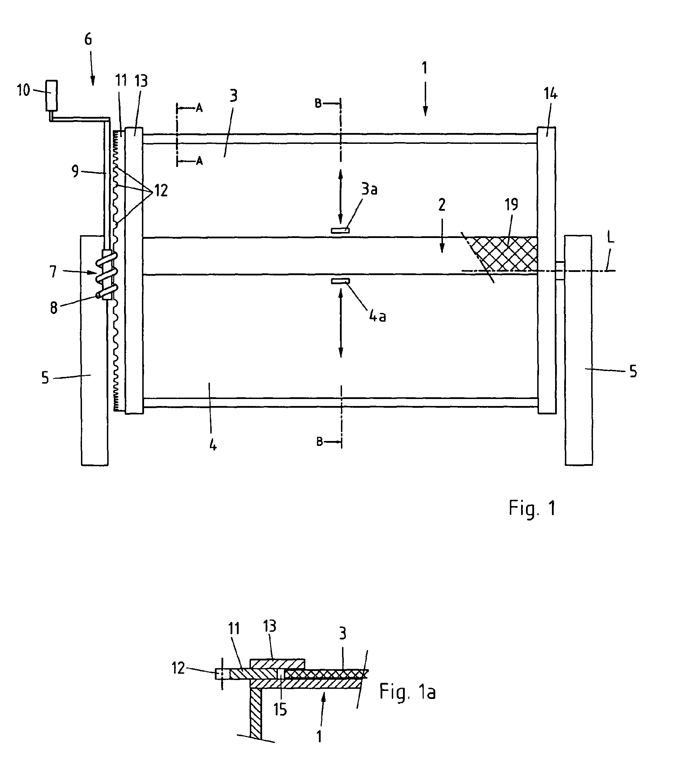

Fig. 1 eine schematische Darstellung der Kompostiervorrichtung in einer Seitenansicht;
Fig. 1 a ein Detail der Vorrichtung in einem Querschnitt entlang der Linie A-A in Fig. 1;
Fig. 2 die Kompostiervorrichtung gemäss Fig. 1 in der Seitenansicht, und
Fig. 3 einen Querschnitt durch die Vorrichtung entlang der Linie B-B in Fig. 1.

Die Vorrichtung zum Kompostieren von Haus- und Gartenabfällen weist eine Trommel 1 auf, die drehbar auf zwei Lagerböcken 5 abgestützt ist. Die Trommel 1 ist im wesentlichen hohlzylindrisch ausgebildet und mit einer Öffnung 2 zum Einfüllen der zu kompostierenden Materialien versehen. Auf der Innenseite der Trommel sind Mischelemente angeordnet, welche jedoch aus dieser Darstellung nicht ersichtlich sind. Das Verschliessen der Öffnung 2 erfolgt mittels zwei Schiebetüren 3, 4, welche je einen Handgriff 3a, 4a aufweisen. Zum Führen der beiden Schiebetüren 3, 4 ist auf jeder Seite der Öffnung 2 ein Führungsring 13, 14 angeordnet, welcher zwischen sich und der Aussenwand der Trommel eine Führungsnut definiert. Damit die Schiebetüren 3, 4 in der Offen- bzw. Schliessstellung arretiert werden können, sind nicht näher dargestellte Verriegelungselemente vorgesehen.

Der Antrieb wird im vorliegenden Beispiel durch eine Handkurbel 10 gebildet, welche über eine Antriebswelle 9 sowie ein Untersetzungsgetriebe 7 mit der Trommel 1 gekoppelt ist. Das Untersetzungsgetriebe ist als Schneckengetriebe ausgebildet, welches durch eine am Ende der Antriebswelle 9 angeordnete Schneckenwelle 7 sowie ein mit der Trommel 1 verbundenes Schneckenrad 11 gebildet wird. Die Schneckenwelle 7 ist mit einer eingängigen Schnecke versehen. Zur Bildung einer Verzahnung weist das Schneckenrad 11 eine Vielzahl von Ausnehmungen 12 auf. Das Schneckenrad 11 ist in der Form eines Ringelements ausgebildet, welches die Trommel 1 stirnseitig überragt und mittels eines Führungsrings 13 an der Trommel 1 fixiert ist. Das Schneckenrad 11 weist im vorliegenden Beispiel 60 Ausnehmungen auf, womit eine Untersetzung von 1:60 bzw. i=60 erreicht wird. Dies bedeutet, dass die Handkurbel 10 sechzig mal gedreht werden muss, damit sich die Trommel 1 einmal um ihre Längsachse L dreht. Damit ist das Getriebe selbsthemmend, d.h. die Trommel 1 kann über die Antriebswelle 9 angetrieben werden nicht jedoch die Antriebswelle 9 über die Trommel 1. Um eine Selbsthemmung des Untersetzungsgetriebes zu erreichen, sollte dieses zumindest ca. fünfzig Ausnehmungen 12 aufweisen.

Das Schneckenrad 11 wirkt gleichzeitig als radialer Abstandhalter für den Führungsring 13, so dass dieser zwischen sich und der Aussenwand der Trommel 1 eine nutförmige Aussparung begrenzt. Auf der anderen Seite ist die Trommel 1 ebenfalls mit einem eine nutförmige Aussparung begrenzenden Führungsring 14 versehen, wobei auch hier ein radialer Abstandhalter vorgesehen ist, der jedoch nicht ersichtlich ist. Die genannten nutförmigen Aussparungen dienen der Aufnahme und Führung der beiden Schiebetüren 3,4.

Die Schnecke 8 der Schneckenwelle 7 greift in die Verzahnung des Schneckenrads 11 ein. Durch Drehen der Kurbel 10 wird die Trommel 1 ebenfalls gedreht, wobei das als Untersetzungsgetriebe wirkende Schneckengetriebe sicherstellt, dass der Kraftaufwand zum Drehen der Trommel relativ klein ist, auch wenn in der Trommel eine grosse Menge an Grünabfällen aufgenommen ist. Das selbsthemmende Schneckengetriebe stellt zudem sicher, dass sich die Trommel 1 nach dem Aufheben des Kraftflusses nicht weiter dreht. Die Trommel 1 ist vorzugsweise aus einem nichtrostenden Metall gefertigt oder mit einer nichtrostenden Beschichtung versehen.

Im Innern der Trommel ist vorzugsweise ein Siebelement 19 angeordnet, welches derart vor der einen Schiebetür 3 platziert ist, dass nach dem Öffnen dieser Tür 3 der Inhalt der Trommel 1, namentlich das kompostierte Material, über dieses Sieb 19 aus der Trommel 1 austreten kann, so dass der Kompost danach in gesiebter Form vorliegt.

Die Ausnehmungen 12 im Schneckenrad 11 werden durch Stanzen erzeugt, wobei als Ausgangsmaterial ein flacher Blechstreifen dient, der nach dem Stanzen durch Biegen in die gewünschte Form gebracht wird. Im gebogenen Zustand weist das Schneckenrad 11 einen Durchmesser von zumindest 50 Zentimetern auf.

Die Fig. 1 a zeigt in vergrösserter Darstellung einen Querschnitt durch ein Detail der Trommel, namentlich einen Querschnitt entlang der Linie A-A in Fig. 1. Aus dieser Darstellung ist insbesondere das Schneckenrad 11 ersichtlich, welches mittels des Führungsrings 13 an der Trommel 1 befestigt ist. Zudem ist die durch den Führungsring 13 und die Trommel 1 begrenzte, nutförmige Aussparung 15 erkennbar, wobei das Schneckenrad 11 als radialer Abstandhalter für den Führungsring 13 dient. Die nutförmige Aussparung dient als seitliche Führung für die Tür 3. Schliesslich ist noch eine einzelne, der in das Schneckenrad 11 eingelassenen Ausnehmungen 12 ersichtlich.

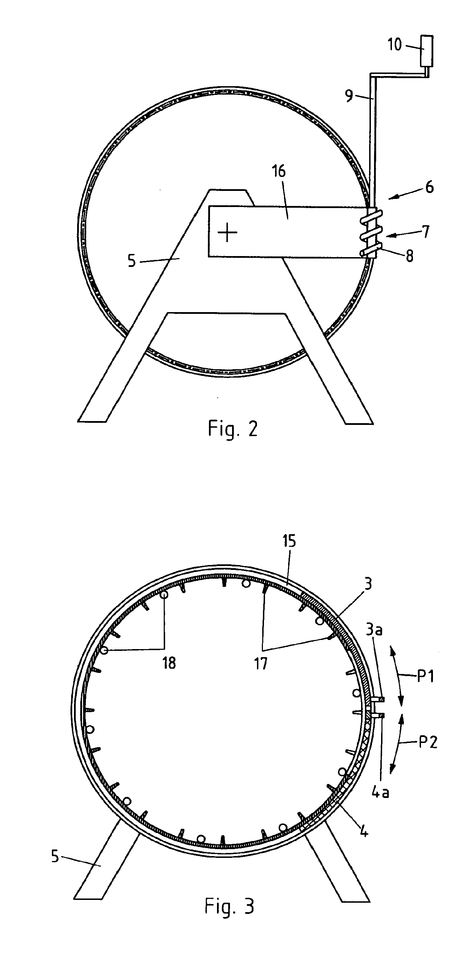

Fig. 2 zeigt die Vorrichtung in einer schematischen Ansicht von der Seite. Aus dieser Darstellung ist insbesondere der eine Lagerbock 5, sowie der an einem schematisch dargestellten Ausleger 16 abgestützte Antrieb 6 ersichtlich. Die Lager sowie die Abstützelemente, welche dem drehbaren Abstützen des Antriebs 6 an dem Ausleger 16 dienen, sind nicht dargestellt. In der Stirnseite der Trommel 1 können zudem Öffnungen vorgesehen werden, welche in dieser Figur nicht eingezeichnet sind, nachfolgend jedoch noch näher erläutert werden.

Fig. 3 schliesslich zeigt einen Querschnitt durch die Trommel 1 entlang der Linie B-B in Fig.1. Wie aus dieser Schnitt-Darstellung ersichtlich ist, ist die Trommel 1 auf der Innenseite mit Mischelementen 17 zum Durchmischen des Inhalts versehen. Diese in axialer Richtung verlaufenden Mischelemente 17 wirken gleichzeitig als Verstärkungsrippen. Die Mischelemente 17 können sowohl einstückig mit der Trommel 1 ausgebildet oder mit dieser verbunden sein. Der Trommelkörper ist vorzugsweise aus einem dünnen Blech gefertigt. Aus dieser Darstellung sind zudem Öffnungen 18 ersichtlich, welche in die Seitenwand eingelassen sind und das Durchtreten der für einen beschleunigten Kompostierungsprozess ggf. notwendigen Luft bzw. des Sauerstoffs ermöglichen. Diese Belüftungsöffnungen 18 reichen in radialer Richtung bis an die eigentliche Trommelwandung heran, so dass in der Trommel 1 von den Abfällen freigesetzte Flüssigkeit, sowie ggf. auch Regenwasser, seitlich entweichen kann. Zudem ist die kreisförmig verlaufende Führungsnut 15 erkennbar, in welcher die beiden Schiebetüren 3, 4 geführt sind.

Durch Drehen der Trommel 1 wird ein homogenes Durchmischen der darin aufgenommenen Abfälle sowie eines ggf. zugegebenen Kompostierbeschleunigers ermöglicht, so dass es zu einem beschleunigten biologischen Abbau und Umwandlungsprozess der in der Trommel 1 aufgenommenen organischen Materialien kommt.

Anstelle oder zusätzlich zu der Handkurbel kann beispielsweise ein Elektromotor zum Antreiben der Trommel 1 vorgesehen werden. Die Speisung des Elektromotors kann über das Netz, über Batterien, über einen Akkumulator oder Solarzellen erfolgen. Vorgängige Aufzählung ist jedoch keinesfalls als abschliessen zu betrachten, da natürlich auch noch andere Antriebsvarianten denkbar sind.

## Patentansprüche

1. Vorrichtung zum Kompostieren von Haus- und Gartenabfällen, mit einer um ihre Längsmittenachse (L) drehbaren Trommel (1), welche mit einer Öffnung (2) zum Einfüllen der Abfälle und im Innern angeordneten Mischelementen (17) zum Durchmischen des Inhalts versehen ist, sowie einem Antrieb (6) zum Drehen der Trommel (1), **dadurch gekennzeichnet, dass** der Antrieb (6) mittels eines selbsthemmenden Untersetzungsgetriebes mit der Trommel (1) gekoppelt ist.

2. Vorrichtung nach Anspruch 1, **dadurch gekennzeichnet, dass** der Antrieb (6) mittels eines Schneckengetriebes mit der Trommel (1) gekoppelt ist.

3. Vorrichtung nach Anspruch 2, **dadurch gekennzeichnet, dass** das Schneckengetriebe eine Untersetzung von zumindest 40:1, vorzugsweise von zumindest 50:1 aufweist.

4. Vorrichtung nach einem der vorhergehenden Ansprüche, **dadurch gekennzeichnet, dass** der Antrieb (6) eine Antriebswelle (9) umfasst, welche mit einer Handkurbel (10) oder einem Elektromotor zum Drehen der Trommel (1) verbunden ist.

5. Vorrichtung nach Anspruch 4, **dadurch gekennzeichnet, dass** die Trommel (1) auf einer Stirnseite mit einem Schneckenrad (11) versehen ist und die Antriebswelle (9) eine in die Verzahnung des Schneckenrads (11) eingreifende Schneckenwelle (7) aufweist.

6. Vorrichtung nach Anspruch 5, **dadurch gekennzeichnet, dass** das Schneckenrad (11) durch ein mit Ausnehmungen (12) zur Bildung der Verzahnung versehenes Ringelement gebildet ist, welches mit der Trommel (1) verbunden ist.

7. Vorrichtung nach Anspruch 6, **dadurch gekennzeichnet, dass** die Ausnehmungen (12) im Schneckenrad (11) durch Stanzen gebildet sind.

8. Vorrichtung nach einem der Ansprüche 5 bis 7, **dadurch gekennzeichnet, dass** das Schneckenrad (11) einen Durchmesser von zumindest 50 Zentimetern aufweist.

9. Vorrichtung nach einem der Ansprüche 5 bis 8, **dadurch gekennzeichnet, dass** das Schneckenrad (11) die Trommel (1) stirnseitig überragt.

10. Vorrichtung nach einem der Ansprüche 5 bis 9, **dadurch gekennzeichnet, dass** das Schneckenrad (11) einen radialen Abstandhalter für einen das Schneckenrad (11) umgebenden Führungsring (13) bildet, so dass zwischen der Aussenwand der Trommel (1) und dem Führungsring (13) eine nutförmige Aussparung (15) zur Aufnahme und Führung einer oder mehrerer Schiebetüren (3, 4) begrenzt wird.

11. Vorrichtung nach einem der vorhergehenden Ansprüche, **dadurch gekennzeichnet, dass** zumindest die eine Stirnseite der Trommel (1) mit Belüftungsöffnungen (18) versehen ist.

12. Vorrichtung nach Anspruch 11, **dadurch gekennzeichnet, dass** die Belüftungsöffnungen (18) in radialer Richtung zumindest annähernd bis an die Trommelwandung heranreichen.
